# EUROPÄISCHE PATENTSCHRIFT

(11) **EP 2 201 255 B1**
(45) Veröffentlichungstag und Bekanntmachung des Hinweises auf die Patenterteilung: **04.04.2012**
(21) Anmeldenummer: 08801577.1
(22) Anmeldetag: 14.08.2008
(51) Int. Cl.: F16B 5/06

(54) **VORRICHTUNG ZUM BEFESTIGEN VON ZWEI ANBAUTEILEN AN EINEM TRÄGERTEIL**
DEVICE FOR ATTACHING TWO ADD-ON PARTS TO A CARRIER PART
DISPOSITIF DE FIXATION DE DEUX COMPOSANTS SUR UN ÉLÉMENT SUPPORT

(30) Priorität: 21.09.2007 DE 102007045296
(43) Veröffentlichungstag der Anmeldung: 30.06.2010
(73) Patentinhaber: A. RAYMOND ET CIE, 38000 Grenoble (FR)
(72) Erfinder: DE JONG, Michael, 79589 Binzen (DE); BREITENFELD, Jens, 79539 Lörrach (DE)
(74) Vertreter: Rüttgers, Joachim
(86) Internationale Anmeldenummer: PCT/EP2008/006679
(87) Internationale Veröffentlichungsnummer: WO 2009/039919

(56) Entgegenhaltungen:
- WO-A-2007/025687
- FR-A- 2 785 339
- GB-A- 2 364 973
- US-A1- 2005 217 083
- US-A1- 2006 066 080
- US-A1- 2006 239 772

## Beschreibung

Die Erfindung betrifft eine Vorrichtung zum Befestigen von zwei Anbauteilen an einem Trägerteil.

Eine derartige Vorrichtung ist aus US 2006/0066080 A1 bekannt. Bei dieser vorbekannten Vorrichtung ist eine als einstückiges Stanz-Biege-Teil aus einem Blechstreifen hergestellte Außenklammer vorhanden, die zwei einander gegenüber liegende sowie an einem Ende miteinander verbundene Schenkelarme und an dem anderen freien Ende des Schenkelarmes eine seitlich abstehende Niederhaltezunge aufweist. Jeder Schenkelarm der Außenklammer verfügt über einen sich von einem Anbindungsende in Richtung des anderen Schenkelarmes erstreckenden Hintergriffabschnitt, der in einem ersten Abstand von der Niederhaltezunge angeordnet ist. Weiterhin ist eine zwischen den Schenkelarmen der Außenklammer angeordnete Innenklammer vorgesehen, die zwei einander gegenüber liegende sowie an einem Ende miteinander verbundene Seitenschenkel aufweist. Die Innenklammer bei dieser vorbekannten Vorrichtung ist aus Kunststoff hergestellt. Weiterhin ist bei dieser vorbekannten Vorrichtung ein Einsteckteil vorhanden, das zum Sichern der Seitenschenkel der Innenklammer gegen Einfedern zwischen deren Seitenschenkel einfügbar ist.

Aus GB 2 364 973 A sind eine Innenhülse und eine Außenhülse bekannt, die aus Kunststoff hergestellt und verschiebbar ineinander gelagert sind. Die Außenhülse dient zum Führen der und als Widerlager für die Innenhülse.

Aus US 2006/0239772 A1 ist ein aus Kunststoff hergestelltes, hülsenartiges Einsteckteil bekannt, in das ein Einfügeteil einführbar ist.

Aus US 2005/0217083 A1 ist eine strukturell dem vorgenannten Dokument US 2006/0239772 A1 entsprechende, ebenfalls vollständig aus Kunststoff hergestellte Vorrichtung zum Befestigen von zwei Anbauteilen an einem Trägerteil offenbart.

Bei weiteren herkömmlichen Vorrichtungen zum Befestigen von zwei Anbauteilen an einem Trägerteil wird üblicherweise für jedes Anbauteil ein separates Befestigungselement verwendet, die in jeweils eigens hierfür in dem Trägerteil vorgesehenen Ausnehmungen zu verankern sind. Dies ist jedoch beispielsweise bei beengten Platzverhältnissen oder bei strukturell höher belasteten Trägerteilen von Nachteil.

Der Erfindung liegt die Aufgabe zugrunde, eine Vorrichtung der eingangs genannten Art anzugeben, die günstig herzustellen ist und mit der sich die beiden Anbauteile jeweils einzeln relativ einfach voneinander entkoppelt, jedoch auch gegen sehr hohe Auszugskräfte widerstandsfähig an einem Trägerteil befestigen lassen.

Diese Aufgabe wird bei einer Vorrichtung der eingangs genannten Art erfindungsgemäß mit den kennzeichnenden Merkmalen des Patentanspruches 1 gelöst.

Die erfindungsgemäße Vorrichtung ist durch die Herstellung sowohl der Außenklammer als auch der Innenklammer als aus einem Blechstreifen als ein hochfestes Material hergestellte einstückige Stanz-Biege-Teile verhältnismäßig kostengünstig herstellbar. Bei der erfindungsgemäßen Vorrichtung lässt sich die Innenklammer zum einen durch Hintergreifen des Trägerteiles mit den Anlageabschnitten in einer in die Innenklammer eingeschobenen und diese sichernden Einschiebestellung positionieren, um ein mit den Auflagezungen in Eingriff stehendes Anbauteil gegenüber Normalbelastungen widerstandsfähig anbringen, während bei außerordentlichen Belastungen wie beispielsweise dem Aufblasen eines Luftsacks bei einem Kraftfahrzeug die Innenklammer über einen bestimmten Weg abschnittsweise aus der Außenklammer herausrutschen kann, bis die Anschlagstege an dem Trägerteil anschlagen. In dieser ausgezogenen Stellung ist jedoch weiterhin sichergestellt, dass durch Verbleib eines Restabschnittes der Innenklammer in der Außenklammer die Schenkelarme der Außenklammer nicht nach innen Einfedern können, so dass das mit der Außenfeder an dem Trägerteil befestigte Anbauteil weiterhin sehr zuverlässig fixiert bleibt. Durch den Anschlag der Anschlagstege an dem Trägerteil ist zum einen eine sehr hohe Auszugskraft sichergestellt und zum anderen die Außenklammer gegen Kraftbeaufschlagung durch die Innenklammer entkoppelt. Weitere zweckmäßige Ausgestaltungen der Erfindung sind Gegenstand der Unteransprüche.

Nachfolgend wird die Erfindung einschließlich weiterer zweckmäßiger Ausgestaltungen und Vorteile anhand eines Ausführungsbeispieles mit Bezug auf die Figuren der Zeichnung näher erläutert. Es zeigen:
- Fig. 1: in einer perspektivischen Ansicht eine Außenklammer bei einem Ausführungsbeispiel einer erfindungsgemäßen Vorrichtung,
- Fig. 2: in einer perspektivischen Ansicht eine Innenklammer bei dem erläuterten Ausführungsbeispiel einer erfindungsgemäßen Vorrichtung,
- Fig. 3: in einem ersten Längsschnitt die Außenklammer gemäß Fig. 1 und die Innenklammer gemäß Fig. 2 bei dem erläuterten Ausführungsbeispiel einer erfindungsgemäßen Vorrichtung in zusammengefügter Anordnung im Eingriff mit einem Trägerteil und mit zwei Anbauteilen,
- Fig. 4: in einem zum Längsschnitt gemäß Fig. 3 rechtwinkligen zweiten Längsschnitt die Anordnung gemäß Fig. 3 und
- Fig. 5: in einer Seitenansicht das Ausführungsbeispiel gemäß Fig. 1 bis Fig. 4 mit einer teilweise aus der Außenklammer herausgezogenen Innenklammer.

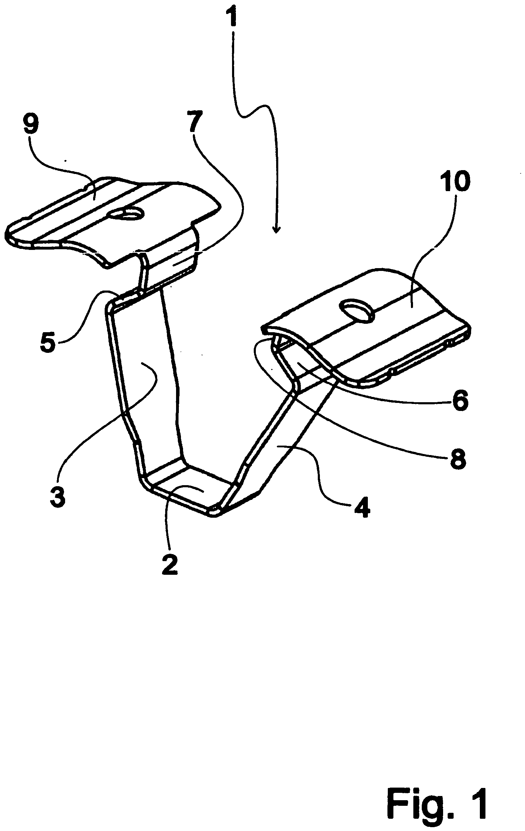

Fig. 1 zeigt in einer perspektivischen Ansicht eine Außenklammer 1 eines Ausführungsbeispiels einer erfindungsgemäßen Vorrichtung.

Die Außenklammer 1 ist als einstückiges Stanz-Biege-Teil aus einem Blechstreifen hergestellt und weist einen planen Bodenabschnitt 2 mit einer quadratischen oder rechteckigen Grundfläche auf. An zwei einander gegenüberliegenden Randseiten des Bodenabschnittes 2 sind zueinander schräg gestellte, mit zunehmendem Abstand von dem Bodenabschnitt 2 sich zunächst voneinander entfernende Schenkelarme 3, 4 angeformt, die in ihrem von dem Bodenabschnitt 2 abgewandten Endbereichen jeweils einen Hintergriffabschnitt 5, 6 aufweisen. Die Hintergriffabschnitte 5, 6 jedes Schenkelarmes 3, 4 sind nach innen abgewinkelt und erstrecken sich von einem außenliegenden Anbindungsende von dem Bodenabschnitt 2 wegweisend in Richtung des gegenüberliegenden Schenkelarmes 3, 4.

An den aufeinander zu weisenden Enden der Hintergriffabschnitte 5, 6 ist jeweils ein Anlageabschnitt 7, 8 angeformt, die wiederum an ihren von den Hintergriffabschnitten 5, 6 wegweisenden Randseiten mit jeweils einer Niederhalterzunge 9, 10 verbunden sind. Die Niederhalterzungen 9, 10 erstrecken sich nach außen und stehen seitlich über die Schenkelarme 3, 4 über. Um der Außenklammer 1 eine gewisse Elastizität in Längsrichtung, das heißt in Richtung der Schenkelarme 3, 4, zu verleihen, sind die Niederhalterzungen 9, 10 S-förmig ausgestaltet, wobei die von dem jeweiligen Anlageabschnitt 7, 8 weiter beabstandete außenseitige Umbiegung in Längsrichtung der Außenklammer 1 näher bei dem Bodenabschnitt 2 liegt als die nahe bei dem jeweiligen Anlageabschnitt 7, 8 angeordnete innenseitige Umbiegung. Weiterhin sind die Abmessungen der Anlageabschnitte 7, 8 und die Abmessungen der Niederhalterzungen 9, 10 so aufeinander abgestimmt, dass die außenseitigen Umbiegungen der Niederhalterzungen 9, 10 in Längsrichtung der Außenklammer 1 in einem ersten Abstand von den Hintergriffabschnitten 5, 6 angeordnet sind. Weiterhin lässt sich Fig. 1 entnehmen, dass die Niederhalterzungen 10 breiter als die Schenkelarme 3, 4 sind.

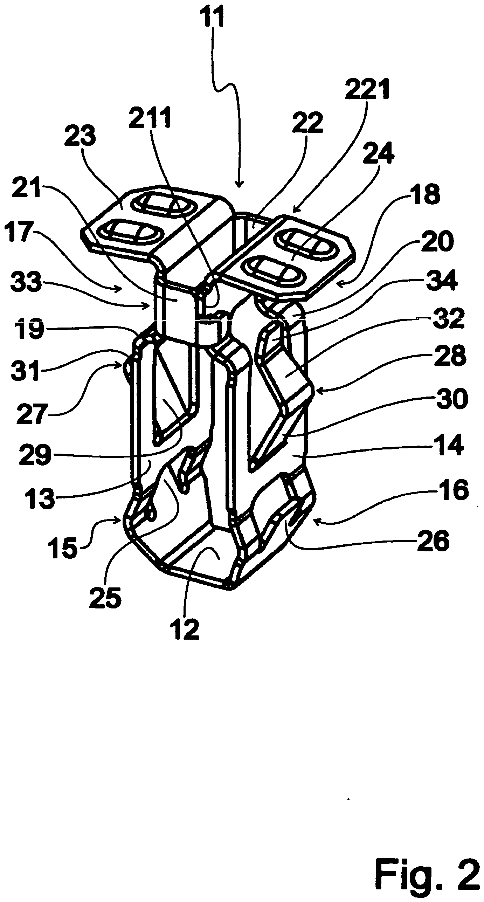

Fig. 2 zeigt in einer perspektivischen Ansicht eine Innenklammer 11 des erläuterten Ausführungsbeispiels einer erfindungsgemäßen Vorrichtung. Die Innenklammer 11 ist wie die Außenklammer 1 als einstückiges Stanz-Biege-Teil aus einem Blechstreifen hergestellt und weist einen planen Fußabschnitt 12 mit einer quadratischen oder rechteckigen Grundfläche auf, wobei für eine kompakte Bauform die Abmessungen des Fußabschnittes 12 der Innenklammer 11 in etwa denen des Bodenabschnittes 2 der Außenklammer 1 entsprechen. An einander gegenüberliegenden Randseiten des Fußabschnittes 12 sind Seitenschenkel 13, 14 ausgebildet, die sich von einem dem Fußabschnitt 12 unmittelbar benachbart liegenden Ausbauchabschnitt 15, 16 in etwa rechtwinklig zu dem Fußabschnitt 12 erstrecken und somit im Wesentlichen parallel zueinander ausgerichtet sind. An den von dem Fußabschnitt 12 abgewandten Enden sind die Seitenschenkel 13, 14 in ihren Kopfabschnitten 17, 18 über eine nach innen gerichtete Umbiegung 19, 20 gegeneinander angenähert und über an einem Seitenschenkel 13, 14 ausgebildete Randlaschen 21, 22, die den anderen Seitenschenkel 13, 14 umgreifen, miteinander verbunden. Die Randlaschen 21, 22 schlagen an Blockierstegen 211, 221 an, die an den jeweils gegenüberliegenden Kopfabschnitten 17, 18 ausgebildet sind und sich in der Ebene der Kopfabschnitte 17, 18 liegend nach außen erstrecken. Dadurch sind die Seitenschenkel 13, 14 im Bereich der Kopfabschnitte 17, 18 fest miteinander verbunden und gegenüber einer Bewegung aufeinander zu sowie gegenüber einer Bewegung voneinander weg verriegelt.

An der dem Fußabschnitt 12 abgewandten Seite jedes Kopfabschnittes 17, 18 ist an jeden Seitenschenkeln 13, 14 eine seitlich nach außen abstehende Auflagezunge 23, 24 angeformt, die in etwa rechtwinklig zu den Seitenschenkeln 13, 14 sowie parallel zu dem Fußabschnitt 12 ausgerichtet sind. Die Breite der Auflagezungen 23, 24 entspricht im Wesentlichen der Breite der Seitenschenkeln 13, 14.

Weiterhin lässt sich Fig. 2 entnehmen, dass jeder Seitenschenkel 13, 14 in seinem Ausbauchabschnitt 15, 16 einen von dem Fußabschnitt 12 wegweisend schräg nach außen ausgestellten Anschlagsteg 25, 26 aufweist, deren von dem Fußabschnitt 12 wegweisenden Enden seitlich nach außen über die Seitenschenkel 13, 14 überstehen. Zwischen dem Ausbauchabschnitt 15, 16 und der Umbiegung 19, 20 ist an jedem Seitenschenkel 13, 14 eine Hintergriffzunge 27, 28 ausgebildet, die mit ihren dem Ausbauchabschnitt 15, 16 zugewandten Enden mit dem jeweiligen Seitenschenkel 13, 14 verbunden sind. Von diesem Anbindungsbereich erstreckt sich bei jeder Hintergriffzunge 27, 28 ein Anstellabschnitt 29, 30 von dem Fußabschnitt 12 wegweisend schräg nach außen. An dem von dem Fußabschnitt 12 abgewandten Ende jedes Anstellabschnittes 29, 30 ist ein Anlageabschnitt 31, 32 angesetzt, die sich von einem außenliegenden Anbindungsende jeweils nach innen in Richtung des Kopfabschnittes 17, 18 erstrecken und schräg angestellt sind. Schließlich verfügt jede Hintergriffzunge 28, 29 an ihrem freien Ende über einen Endabschnitt 33, 34, der in etwa parallel zu der Längsrichtung der Innenklammer 11 ausgerichtet ist.

Die Anlageabschnitte 30, 31 und die Auflagezungen 23, 24 weisen einen zweiten Abstand voneinander auf, der größer als der erste Abstand zwischen den Hintergriffabschnitten 5, 6 und den Niederhalterzungen 9, 10 bei der Außenklammer 1 ist.

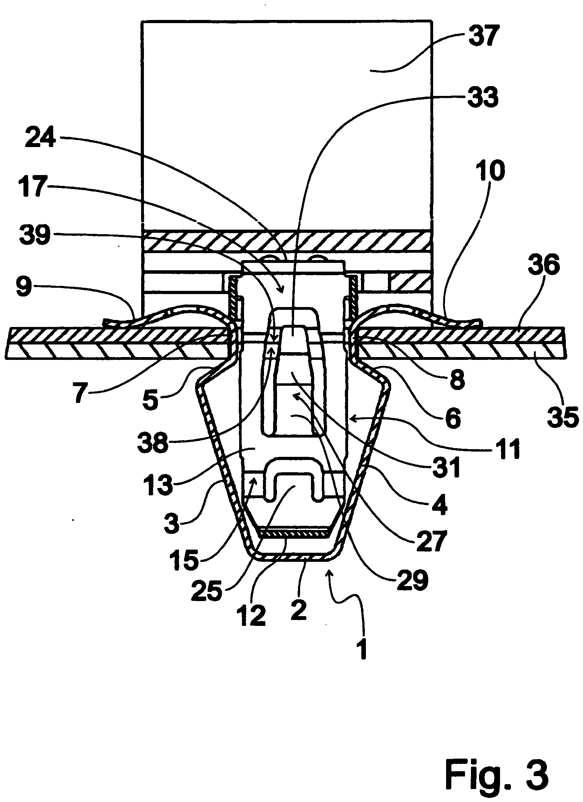

Fig. 3 zeigt in einem ersten Längsschnitt die Außenklammer 1 gemäß Fig. 1 und die Innenklammer 11 gemäß Fig. 2 bei dem erläuterten Ausführungsbeispiel in einer ineinander gefügten Anordnung in einer Einbausituation, in der ein Trägerteil 35 beispielsweise in Gestalt eines Karosseriebleches mit einer Gewebematte 36 einer Luftsackeinrichtung als erstem Anbauteil sowie einem als sogenannter "retainer" der Luftsackeinrichtung ausgebildeten Befestigungsgehäuse 37 als zweitem Anbauteil verbunden ist. Wie aus Fig. 3 ersichtlich ist, liegen die Niederhalterzungen 9, 10 der Außenklammer 1 an der Gewebematte 36 an, während die Hintergriffabschnitte 5, 6 der Außenklammer 1 in ihren innenseitig liegenden Randbereichen mit der Umrandung einer in dem Trägerteil 35 ausgebildeten Einfügeausnehmung 38 in Eingriff sind. Durch die Schrägstellung der Hintergriffabschnitte 5, 6 ist zusammen mit der durch die geschwungenen Niederhalterzungen 9, 10 erzielten Elastizität ein Toleranzausgleich bezüglich der Dicke des Trägerteiles 35 und/oder des ersten Anbauteiles, hier in Gestalt der Gewebematte 36, erreicht.

Die Anlageabschnitte 8, 9 der Außenklammer 1 liegen mit ihren Au-βenseiten an der in dem Trägerteil 35 eingebrachten Einfügeaushebung 38 und an einer in der Gewebematte 36 eingebrachten Durchsteckaushebung 39 an, während die Innenseiten der Anlageabschnitte 8, 9 bereits bei verhältnismäßig geringfügiger Bewegung der Schenkelarme 3, 4 der Außenklammer 1 aufeinander zu an der Innenklammer 11 anschlagen, so dass die Außenklammer 1 trotz einer verhältnismäßig flexiblen Bauweise mit einer hohen Auszugskraft an dem Trägerteil 35 verankert ist.

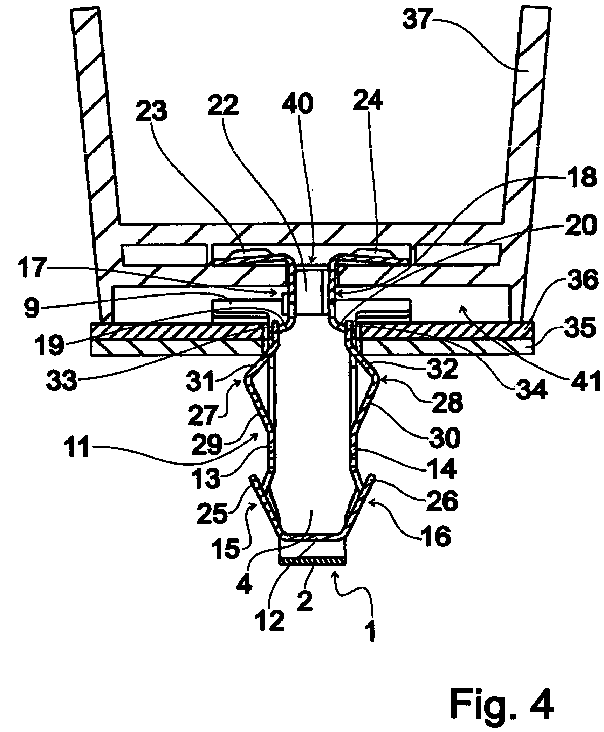

Die Fig. 4 zeigt in einem zweiten Längsschnitt die Außenklammer 1 gemäß Fig. 1 und die Innenklammer 11 gemäß Fig. 2 bei dem erläuterten Ausführungsbeispiel einer erfindungsgemäßen Vorrichtung in der Anordnung gemäß Fig. 4, wobei die Schnittebene des zweiten Längsschnittes in etwa rechtwinklig zu der Schnittebene des ersten Längsschnittes gemäß Fig. 3 liegt. Aus Fig. 4 ist ersichtlich, dass die Auflagezungen 23, 24 der Innenklammer 11 in einem in dem Befestigungsgehäuse 37 ausgebildeten Aufnahmeraum 40 angeordnet sind und aufgrund der Anlage der Anlageabschnitte 31, 32 der Hintergriffzungen 27, 28 der Innenklammer 11 an dem Randbereich der Einfügeaushebung 38 das Befestigungsgehäuse 37 an dem Trägerteil 35 sichern. Die Niederhalterzungen 9, 10 der Außenklammer 1 liegen dabei in einem in dem Befestigungsgehäuse 37 ausgebildeten Kammerraum 41.

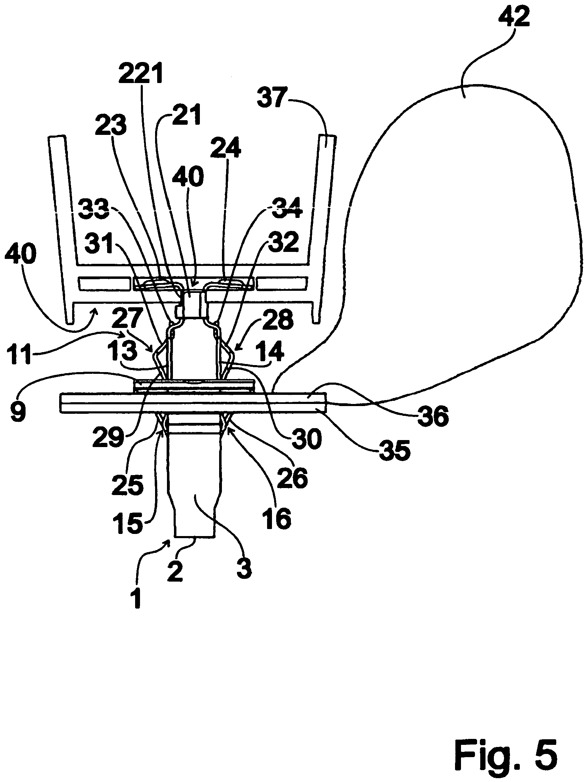

Fig. 5 zeigt in einer Seitenansicht die Außenklammer 1 gemäß Fig. 1 und die Innenklammer 11 gemäß Fig. 2 des erläuterten Ausführungsbeispiels einer erfindungsgemäßen Vorrichtung in einer Anordnung, bei der gegenüber der Anordnung gemäß Fig. 3 und Fig. 4 die Innenklammer 11 über einen Verschiebeweg aus der Außenklammer 1 herausgezogen ist. Die Anordnung gemäß Fig. 5 stellt sich beispielsweise ein, wenn nach einer in Fig. 5 schematisch dargestellten Expansion eines auch "Airbag" genannten Luftsackes 42, von dem die Gewebematte 36 ein Teil ist, das dargestellte Befestigungsgehäuse 37 sowie weitere nicht dargestellte Befestigungsgehäuse 37 aufgrund der hohen einwirkenden Kräfte nach Einfedern der Hintergriffzungen 27, 28 der Innenklammer 11 von dem Trägerteil 35 abgehoben sind. Dabei stoßen die Enden der Anschlagstege 25, 26 der Seitenschenkel 13, 14 der Innenklammer 11 an den Randbereich der Einfügeaushebung 38 des Trägerteiles 35 an und blockieren bis auf zerstörend wirkende übergroße Kräfte ein weiteres Ausziehen der Innenklammer 11 aus der Außenklammer 1. Da die Innenklammer 11 auch in dieser ausgezogenen Anordnung weiterhin zwischen den Anlageabschnitten 7, 8 der Außenklammer 1 angeordnet ist, bleibt die Festigkeit der Verbindung der Gewebematte 36 mit dem Trägerteil 35 erhalten, da sich die Schenkelarme 3, 4 der Außenklammer 1 aufgrund der blockierenden Wirkung der Innenklammer 11 weiterhin nicht aufeinander zu bewegen können.

## Patentansprüche

1. Vorrichtung zum Befestigen von zwei Anbauteilen (36, 37) an einem Trägerteil (35) mit einer als einstückiges Stanz-Biege-Teil aus einem Blechstreifen hergestellten Außenklammer (1), die zwei einander gegenüberliegende sowie an einem Ende miteinander verbundene Schenkelarme (3, 4) und an dem anderen freien Ende jedes Schenkelarmes (3, 4) eine seitlich abstehende Niederhalterzunge (9, 10) aufweist, wobei jeder Schenkelarm (3, 4) der Außenklammer (1) einen sich von einem Anbindungsende in Richtung des anderen Schenkelarmes (3, 4) erstreckenden Hintergriffabschnitt (5, 6) aufweist, der in einem ersten Abstand von der Niederhalterzunge (9, 10) angeordnet ist, und mit einer zwischen den Schenkelarmen (3, 4) der Außenklammer (1) angeordneten Innenklammer (11), die zwei einander gegenüberliegende sowie an einem Ende miteinander verbundene Seitenschenkel (13, 14) aufweist, **dadurch gekennzeichnet, dass** die Innenklammer (11) als einstückiges Stanz-Biege-Teil aus einem Blechstreifen hergestellt ist, dass an dem anderen Ende jedes Seitenschenkels (13, 14) der Innenklammer (11) eine seitlich abstehende Auflagezunge (23, 24) ausgebildet ist, dass jeder Seitenschenkel (13, 14) der Innenklammer (11) einen sich von einem Anbindungsende in Richtung des anderen Seitenschenkels (13, 14) erstreckenden Anlageabschnitt (31, 32) aufweist, wobei jeder Seitenschenkel (13, 14) über einen an jeweils einer Hintergriffzunge (27, 28) der Innenklammer (11) ausgebildeten Anlageabschnitt (31, 32) mit dem Trägerteil (35) in Eingriff kommt und wobei jeder Anlageabschnitt (31, 32) in einem zweiten Abstand von den Auflagezungen (23, 24) angeordnet ist, der größer als der erste Abstand der Hintergriffabschnitte (5, 6) von den Niederhalterzungen (9, 10) bei der Außenklammer (1) ist, und dass bei der Innenklammer (11) jeder Seitenschenkel (13, 14) auf der der Anlagezunge (23, 24) abgewandten Seite des Anlageabschnittes (31, 32) einen Anschlagsteg (25, 26) aufweist, der sich mit seinem freien Ende schräg nach außen erstreckt.

2. Vorrichtung nach Anspruch 1, **dadurch gekennzeichnet, dass** bei der Außenklammer (1) zwischen den aufeinander zu weisenden Enden der Hintergriffabschnitte (5, 6) und den Niederhalterzungen (9, 10) plane Anlageabschnitte (7, 8) ausgebildet sind.

3. Vorrichtung nach Anspruch 1 oder nach Anspruch 2, **dadurch gekennzeichnet, dass** bei der Außenklammer (1) zwischen den den freien Enden gegenüberliegenden Enden der Schenkelarme (3, 4) ein planer Bodenabschnitt (2) ausgebildet ist.

4. Vorrichtung nach Anspruch 3, **dadurch gekennzeichnet, dass** bei der Innenklammer (11) zwischen den den Auflagezungen (23, 24) abgewandten Enden der Seitenschenkel (13, 14) ein planer Fußabschnitt (12) ausgebildet ist, dessen Abmessungen im Wesentlichen den Abmessungen des Bodenabschnittes (2) der Außenklammer (1) entspricht.

5. Vorrichtung nach einem der Ansprüche 1 bis 4, **dadurch gekennzeichnet, dass** bei der Innenklammer (11) jeder Anlageabschnitt (31, 32) an einer federnden Hintergriffzunge (27, 28) ausgebildet ist, deren freies Ende der zugeordneten Auflagezunge (23, 24) zugewandt ist.

6. Vorrichtung nach Anspruch 5, **dadurch gekennzeichnet, dass** jede Hintergriffzunge (27, 28) einen das freie Ende abschlie-βenden planen Endabschnitt (33, 34) aufweist.

7. Vorrichtung nach einem der Ansprüche 4 bis 6, **dadurch gekennzeichnet, dass** bei der Innenklammer (11) die dem Fußabschnitt (12) abgewandten Enden der Seitenschenkel (13, 14) in einem Kopfabschnitt (17) miteinander verbunden sind.

## Claims

1. Device for fastening two added parts (36, 37) to a supporting part (35), having an outer clip (1) which is produced from a strip of sheet metal as a one-piece stamped/punched and bent part and which has two side-arms (3, 4) which are situated opposite one another and are connected together at one end and which has, at the other, free, end of each side-arm (3, 4) a hold-down tongue (9, 10) which projects sideways, each side-arm (3, 4) of the outer clip (1) having an under-fitting portion (5, 6) which extends from a connected end towards the other side-arm (3, 4) and which is arranged at a first distance from the hold-down tongue (9, 10), and having an Inner clip (11) which is arranged between the side-arms (3, 4) of the outer clip (1) and which has two side-limbs (13, 14) which are situated opposite one another and are connected together at one end, **characterised In that** the Inner clip (11) is produced from a strip of sheet metal as a one-piece stamped/punched and bent part, **in that** a retaining tongue (23, 24) which projects sideways is formed at the other end of each side-limb (13, 14) of the inner clip (11), **in that** each side-limb (13, 14) of the inner clip (11) has a contacting portion (31, 32), extending from a connected end towards the other side-limb (13, 14), whereas each side limb (13, 14) engages with the supporting part (35) via one contacting portion (31, 32) which is formed on respective under-fitting tongues (27, 28) of the Inner clip and whereas each contacting portion (31, 32) is arranged at a second distance from the retaining tongues (23, 24) which is larger than the first distance at which the underfitting portions (5, 6) are arranged from the hold-down tongues (9, 10) on the outer clip (1), and **in that**, on the inner clip (11), each side-limb (13, 14) has, on the side of the contacting portion (31, 32) remote from the retaining tongue (23, 24), a stop web (25, 26) of which the free end extends obliquely outwards.

2. Device according to claim 1, **characterised in that**, on the outer clip (1), plane contacting portions (7, 8) are formed between those ends of the under-fitting portions (5, 6) which point towards one another and the hold-down tongues (9, 10).

3. Device according to claim 1 or according to claim 2, **characterised in that**, on the outer clip (1), a plane bottom portion (2) is formed between the opposite ends of the side-arms (3, 4) from the free ends.

4. Device according to claim 3, **characterised in that**, on the inner clip (11), a plane base portion (12) is formed between those ends of the side-limbs (13, 14) which are remote from the retaining tongues (23, 24), the dimensions of which plane base portion (12) substantially correspond to the dimensions of the bottom portion (2) of the outer clip (1).

5. Device according to one of claims 1 to 4, **characterised in that**, on the inner clip (11), each contacting portion (31, 32) is formed on a resilient under-fitting tongue (27, 28) whose free end is adjacent the associated retaining tongue (23, 24).

6. Device according to claim 5, **characterised in that** each underfitting tongue (27, 28) has a plane end portion (33, 34) in which the free end terminates.

7. Device according to one of claims 4 to 6, **characterised in that**, on the inner clip (11), those ends of the side-limbs (13, 14) which are remote from the base portion (12) are connected together at a head portion (17).

## Revendications

1. Dispositif de fixation de deux éléments rapportés (36, 37) sur un élément faisant office de support (35), se composant d'une agrafe extérieure (1), consistant en un élément monobloc réalisé par pliage et découpage à la presse à partir d'un flan en tôle, qui comprend deux segments formant pattes (3, 4) à disposition respectivement opposée, qui sont raccordés l'un à l'autre au niveau d'une de leurs extrémités, ainsi qu'une languette de maintien en position d'application (9, 10) qui fait saillie dans le plan latéral depuis l'extrémité libre de chaque segment formant patte (3, 4), chaque segment formant patte (3, 4) de l'agrafe extérieure (1) comportant en l'occurrence une portion de cramponnement par derrière (5, 6) s'étendant depuis une extrémité de liaison en direction de l'autre segment formant patte (3, 4) qui se trouve à une certaine distance des languettes de maintien en position d'application (9, 10), et d'une agrafe intérieure (11) disposée entre les segments formant pattes (3, 4) de l'agrafe extérieure (1), qui se compose de deux segments latéraux (13, 14) respectivement opposés, raccordés l'un à l'autre au niveau d'une de leurs extrémités, **caractérisé en ce que** l'agrafe intérieure (11) se présente sous la forme d'un élément monobloc réalisé par pliage et découpage à la presse à partir d'un flan en tôle, **en ce qu'**il est prévu, au niveau de l'autre extrémité de chaque segment latéral (13, 14) de l'agrafe intérieure (11) une languette d'assise (23, 24) faisant saillie dans le plan latéral, **en ce que** chaque segment latéral (13, 14) de l'agrafe Intérieure (11) comporte une portion d'appui (31, 32) s'étendant depuis l'extrémité correspondant à la liaison de raccordement dans la direction de l'autre segment latéral (13, 14), chaque segment latéral (13, 14) vient en prise d'engagement avec l'élément faisant office de support (35) par l'intermédiaire d'une portion d'appui (31, 32) que comporte respectivement une languette de cramponnement par derrière (27, 28) de l'agrafe intérieure, et chaque portion d'appui (31, 32) est disposée à une deuxième certaine distance des languettes d'assise (23, 24), qui est plus grande que la première distance séparant les portions de cramponnement par derrière (5, 6) des languettes de maintien en position d'application (9, 10) de l'agrafe extérieure (1) et **en ce que** dans le cas de l'agrafe intérieure (11) chaque segment latéral (13, 14) comporte, sur le côté de la portion d'appui (31, 32) opposé à la languette d'assise (23, 24), un segment de butée (25, 26), dont l'extrémité libre s'étend suivant une disposition oblique vers l'extérieur.

2. Dispositif selon la revendication 1, **caractérisé en ce que** dans l'agrafe extérieure (1) il est prévu des portions d'appui planes (7, 8) entre les extrémités respectivement orientées l'une vers l'autre des portions de cramponnement par derrière (5, 6) et des languettes de maintien en position d'application (9, 10).

3. Dispositif selon la revendication 1 ou la revendication 2, **caractérisé en ce que**, dans l'agrafe extérieure(1), il est prévu une portion de fond plane (2) entre les extrémités des segments formant pattes (3, 4) opposées à leurs extrémités libres.

4. Dispositif selon la revendication 3, **caractérisé en ce que**, dans l'agrafe Intérieure (11), il est prévu, entre les extrémités des segments latéraux (13, 14) respectivement opposées aux languettes d'assise (23, 24), une portion plane définissant une semelle d'ancrage (12), dont les dimensions correspondent sensiblement aux dimensions de la portion de fond (2) de l'agrafe extérieure (1).

5. Dispositif selon l'une des revendications 1 à 4, **caractérisé en ce que**, dans l'agrafe Intérieure (11), chaque portion d'appui (31, 32) fait partie intégrante d'une languette élastique de cramponnement par derrière (27, 28), dont l'extrémité libre est orientée vers la languette d'assise (23, 24) qui lui correspond respectivement.

6. Dispositif selon la revendication 5, **caractérisé en ce que** chaque languette de cramponnement par derrière (27, 28) comporte une portion d'extrémité plane (33, 34) terminant son extrémité libre.

7. Dispositif selon l'une des revendications 4 à 6, **caractérisé en ce que**, dans l'agrafe intérieure (11), les extrémités des segments latéraux (13, 14) orientées à l'opposé de la portion définissant une semelle d'ancrage (12) sont reliées ensemble pour constituer une portion de tête (17).
